# EUROPEAN PATENT SPECIFICATION

(11) **EP 1 337 920 B1**
(45) Date of publication and mention of the grant of the patent: **25.02.2015**
(21) Application number: 00977108.0
(22) Date of filing: 10.11.2000
(51) Int. Cl.: G06F 17/30, G06F 11/34

(54) **A SYSTEM AND METHOD FOR REPLAYING A PREDEFINED PATH THROUGH THE INTERNET**
EIN SYSTEM UND VERFAHREN, UM EINEN PREDEFINIERTEN WEG ERNEUT ÜBER DAS INTERNET ZU VOLLZIEHEN
SYSTEME ET PROCEDE DE REPETITION D'UN TRAJET PREDEFINI SUR INTERNET

(30) Priority: 12.11.1999 US 165102 P; 12.11.1999 US 165103 P
(43) Date of publication of application: 27.08.2003
(73) Proprietor: BMC Software, Houston, TX 77042 (US)
(72) Inventor: DAVIS, Clay, Austin, TX 78759 (US); BODWELL, Walter, R., Austin, TX 78750 (US); KLOBE, Michael, C., Austin, TX 78727 (US)
(74) Representative: DREISS Patentanwälte PartG mbB
(86) International application number: PCT/US2000/030805
(87) International publication number: WO 2001/035222

(56) References cited:
- GB-A- 2 341 955
- US-A- 5 974 572
- US-A- 6 138 157
- "SiteScope Users' Guide - URL Transaction Monitor" [Online] 10 February 1999 (1999-02-10) , FRESHWATER SOFTWARE, INC , BOULDER, COLORADO, USA XP002234976 Retrieved from the Internet: <URL: http://web.archive.org/web/19990210114736/ demo.freshtech.com/SiteScope/docs/URLSeqMo n.htm> [retrieved on 2003-03-17] the whole document

## Description

### TECHNICAL FIELD OF THE INVENTION

The present invention relates generally to web page systems and methods, and more particularly, a software system and method for replaying a predetermined web path from an intermediate server.

### BACKGROUND OF THE INVENTION

As web sites become more ubiquitous, businesses are increasingly interested in setting performance goals and quality standards for their web sites. One way to achieve these objectives is to simulate a user's experience with a company web site. By simulating a user's experience, the owner of a web site can determine the integrity of links and resources in the page and rate a customer's experience against the operational goals defined by the business. Furthermore, the information technology departments of companies will be better able to track and measure critical web resources.

One way to simulate a user's path through a web site is to record all the requests made by a user at a proxy server, record additional data related to each request and open a socket to send back the exact data that was passed. This technique can be used for web sites that contain only static pages. However, an increasing number of web sites are dynamic, and a method for replaying a user's path through the web must be able to account for content such as session IDs and forms. Because dynamic content can cause a web page session to expire or change over time, simply replaying a series of requests will often result in errors being returned from the target web site.

Current methods for simulating a path through web sites do not adequately address dynamic web sites. Microsoft Web Stress Analyzer Tool was developed to stress test a web site prior to making the site available on the Internet. The Microsoft tool only supports cookie-based dynamic web site techniques but does not support other techniques, nor does it support HTTPS communication between a browser and a web site. Furthermore, the Microsoft tool requires that software be downloaded and installed on a user's computer.

"SiteScope Users' Guide - URL Transaction Monitor", [Online] 10 February 1999, Freshwater Software, Inc., Boulder, Colorado, USA, XP002234976 refers to a method for automatically testing web sites for obtaining an environment assessment. The idea behind this reference is completely different from the object of the present invention. Just the same, US 6,138,157 refers to a method of testing a web site.

### SUMMARY OF THE INVENTION

The present invention provides a web path replay system and method that substantially eliminates or reduces disadvantages and problems associated with previously developed web path replay systems. More specifically, the present invention provides a system and method for replaying a predefined path through a set of web pages. The method for replaying a predefined web path includes selecting a saved request associated with a saved URL from a request history. If the saved request is a form request, the present invention can determine a best-fit form from the originating web page for which a replay request can be made. Alternatively, if the request is not a form request, the present invention selects a best-fit URL on the originating web page for which a replay request can be made. After a best-fit form or a best-fit URL is selected as a target URL, the present invention makes a replay request to the target URL.

The present invention provides substantial advantages over previously developed systems by allowing a path through a dynamic web page to be replayed.

The present invention provides yet another important technical advantage by being completely web based.

The present invention provides yet another important technical advantage by running on industry standard servers.

The present invention provides yet another important technical advantage by supporting HTTPS communications.

The present invention provides yet another important technical advantage because it does not require the user to install additional software on a user's computer.

The present invention provides a significant advantage by being able to replay a path through a substantially larger number of web pages than previously developed methods.

### BRIEF DESCRIPTION OF THE DRAWINGS

For a more complete understanding of the present invention and the advantages thereof, reference is now made to the following description taken in conjunction with the accompanying drawings in which like reference numerals indicate like features and wherein:
Figure 1 is a diagrammatic representation of a system in which the present invention can record and replay a path; and
Figure 2 is a flow chart illustrating one embodiment of the present invention for replaying a path through a set of web pages.

### DETAILED DESCRIPTION OF THE INVENTION

Preferred embodiments of the present invention are illustrated in the FIGUREs, like numerals being used to refer to like and corresponding parts of the various drawings.

For the purposes of the present invention, "content" refers to the HTML and other data returned to a user's browser by a web page in response to user's commands (e.g., when the user selects a link). "Static" content is that content returned to a user's browser which does not change over time. A "dynamic" web page represents a page that can contain different, non-preformatted content that changes over time in response to the same user's commands. A "path" is a succession of web requests in a particular order.

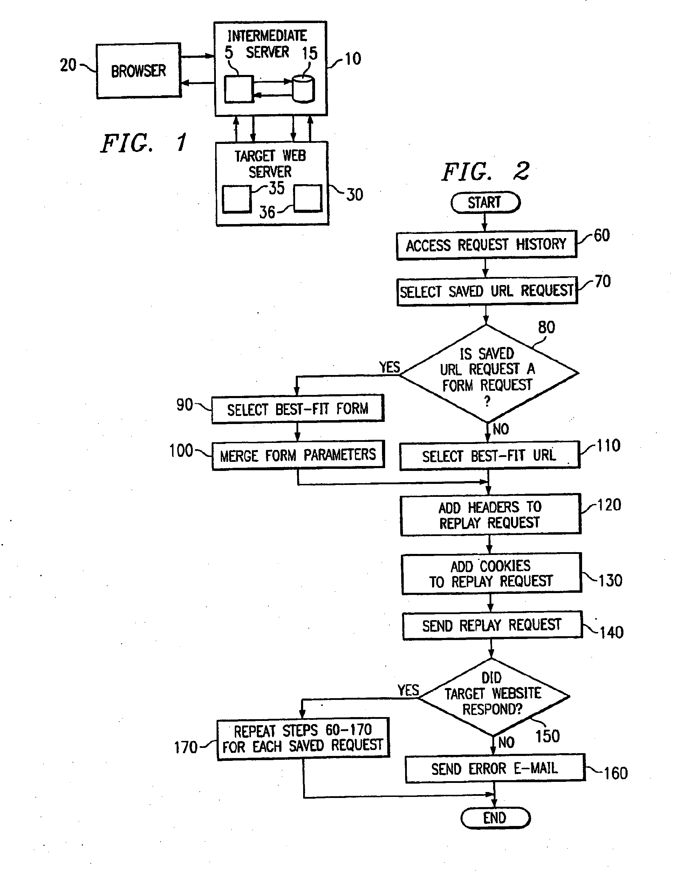

The present invention provides a system for replaying a user's path through the web from an intermediate server. Figure 1 is a diagrammatic representation of a system in which the present invention can be implemented for recording and replaying a user's path through the web. A user can access software program 5 at intermediate server 10 via web browser 20. In one embodiment, the user, after accessing software program 5 at intermediate server 10, can use web browser 20 to provide a path name (e. g. "path 1") and a starting URL to software program 5. The path name and starting URL can be saved in database 15. The path name is used to categorize a particular path defined by the user, while the starting URL is the starting point of the user's path. Once the user indicates they are ready to begin defining a path by clicking on a "start" button, for example, software program 5 can then cause a display window to open in web browser 20. The display window is a new window in web browser 20 in which the content received in response to a user's commands will be displayed. Web browser 20 sends the request for the starting URL to software program 5 and software program 5, after saving the request at database 15, forwards the request to target web server 30. Target web server 30 will then return the content corresponding to web page 35, which is associated with URL in the request, to intermediate server 10. Software program 5 can then mediate the content so that any additional requests made by a user from the content of web page 35 will be routed through intermediate server 10. Mediation of the content of a web page can be done according to the method disclosed in patent application US 2005/0256955 A1, entitled "A System and Method of Mediating a Web Page" by inventors Clay Davis, Walter Bodwell and Michael Klobe, filed on November 10, 2000.

Software program 5, after mediating the content, can then communicate the mediated content to the display window of web browser 20. From a user's perspective, the page displayed in the display window of web browser 20 can look identical to the view which would have been displayed had the user accessed target web server 30 directly. However, the display window of web browser 20 may have been opened without navigation or status bars. This may have been done so that a user will not inadvertently circumvent the path defining process by directly entering a URL at the top of the web browser 20 rather than accessing URLs through the mediated content displayed in the display window.

As the user makes an additional request for new web page 36 (e. g. a "target web page 36"), web page 35 becomes the "originating page 35." Target web page 36 may be associated with the same target web server 30 as originating page 35 or a different target web server 30. Again software program 5 will mediate the contents of target web page 36 in response to the additional request and return the mediated contents to browser 20. It should be understood that both originating page 35 and target web page 36 are mediated. If the user makes an additional request from target web page 36, target web page 36 will be equivalent to originating page 35 for yet another target web page 36, and so on. As an example, if the "page A" was associated with the starting URL, and the user made a request for "page B" based on the mediated contents of "page A", "page A" would be originating web page 35 for target "page B." Software program 5 would mediate the contents of "page B" and forward the mediated contents to web browser 20. If the user made an additional request for "page C" from "page B", "page B" would be originating page 35 for target "page C." "Page A," "Page B" and "Page C" may be associated with the same web server, or each may be associated with a different web server. As the user enters an additional request based on the content displayed in the display window of web browser, software program 5 saves the additional request in database 15.

In addition to saving requests to database 15, software program 5 can also record content such as cookies, headers and form parameters sent with the user request or returned in the content of web page 35. In this manner, intermediate server 10 can build a request history that contains information corresponding to each request made by a user. Generally, software program 5 can save all interactions to database 15 that require a server's intervention as a "request history" for that path.

When the user is done defining a path through the web, the user can stop the path defining process, and the path is saved under the path name provided by the user.

During the replay process of the present invention, software program 5 accesses the request history stored at database 15 and sends out the requests in the order they were originally made.

Furthermore, software program 5 will send the appropriate headers, cookies and/or form parameters necessary for a particular web page. Target web server 30 will return the appropriate content of target web page 36, which corresponds to each request. For each additional request, target web page 36 for the previous request will become originating page 35 for the next replay request. Software program 5 will continue to send out requests from the request history until the path defined by the user is fully replayed.

Figure 2 is a flow chart showing one embodiment for replaying a predefined path through a set of web pages according to the present invention. At step 60, software program 5 can access the request history from database 15 containing such information as the starting URL, additional requests, headers, cookies, whether a form request was a POST or a GET, addresses of URLs within the content of originating page 35 and form parameters. During the first iteration of the present invention, the request corresponds to the starting URL of the user's path. Because the first request is made to the starting URL, program 5 will generally not have to send information corresponding to dynamic content. However, the additional requests may require that software program 5 send information that is dynamic in nature. From the request history stored on database 15, software program 5, at step 70, selects a saved request. The saved requests are generally selected in chronological order so that the user's path may be properly replayed.

After a particular saved request has been selected, software program 5, at step 80, can determine whether the saved request is a form request. A particular URL request can be distinguished as a form request because, in the request history stored on database 15 the URL could have been noted to be associated with a "FORM" tag. If such an association is not found, then the request will not be for a form. As shown in Figure 2, if the saved request is a form request, the present invention performs steps 90 and 100 prior to performing step 120. If the saved request is not a form request, the present invention performs step 110 prior to performing step 120.

If the saved request is a form request, at step 90, software program 5 can determine to which form a replay request should be later made. Determining the form to which a replay request should be made can be much more involved than simply sending a replay request to the URL in the saved request. It is possible that the "current configuration," that is the configuration encountered when the path is replayed, of originating form 35 may be different than the configuration when the user originally defined the path. Furthermore, the current configuration of originating page 35 may contain more than one form to which a replay request can be made, and can even contain multiple forms sharing a common URL. In order to account for these difficulties, software program, at step 90, selects a best-fit form from the potential forms located on the current configuration of originating page 35.

The method for selecting a best-fit form depends on the form parameters that were saved when the user originally defined a path. Form parameters can be generated in several ways. First, the user will generate form parameters when they originally fill in the form. Second, form parameters can be created or modified by web browser 20 through JavaScript, based on the user's entries. Finally, form parameters can be included in the form itself with values generated by target web server 30. Form parameters generated by JavaScript or included in the form itself are often hidden from the user. The saved form parameters corresponding to a saved request will generally include form parameters filled in by the user. However, if web browser 20 replaces or changes a user submitted form parameter with a JavaScript-generated form parameter, the JavaScript-generated form parameter will be saved in the request history rather than the user-submitted form parameter. For example, if a user clicked on a check box, but JavaScript changed this to a "1," the replay request will only include the "1" when the path is replayed, and not an operation for checking the box. This is done because intermediate server 10 need only submit the parameters that will generate the appropriate response from target web server 30.

If the saved request is a form request, at step 90, software program 5 reads the tags in originating page 35 to determine if any forms match the URL in saved request. Any forms that do not include a matching URL are rejected. The order of steps for filtering out remaining forms on web page 35 depends on whether the saved request is a "POST" or a "GET." Software program 5 can distinguish a "POST" from a "GET" because the category of a form request was saved in the request history when the user originally defined the path. If the saved request is for a POST, every form in originating page 35 is rejected that does not require all the parameters that are saved in the request history and would be included in a replay request. For example, if a "name" parameter is associated in the request history with a saved request, every form on originating page 35 which does not require the "name" parameter will be rejected. If more than one potential form still remains on the originating web page, the present invention will reject all forms on web page 35 which do not contain all the hidden parameters saved in the request history for the saved request. If there is still more than one potential form left after these initial filtering processes, a form is chosen in a predetermined manner. For example, the first remaining form on the page could be chosen or a random remaining form could be chosen. It should be understood that any predetermined selection method could be used to select the best-fit form from the remaining eligible forms.

If the request is a GET, the first-pass filter of rejecting any forms which do not match the URL in saved request is the same as when the form request is a POST. However, the second and third-pass filters are transposed. With a GET, as opposed to a POST, software program 5 first rejects all forms which do not contain all the hidden parameters saved in the request history for the saved request. If more than one potential form remains on web page 35, the present invention will reject all forms that do not contain all the parameters saved in the request history that would be included in a replay request. As noted in conjunction with the POST request, forms on originating page 35 may not require all the parameters saved in the request history. If there is still more than one potential form left after the initial filters are applied, a form is chosen in a predetermined manner, as with a POST request. For example, the first remaining form on the page could be chosen or a random remaining form could be chosen. Again, it would be understood that any manner of selecting a form from the eligible forms could be used.

After determining to which form a request should be associated, software program 5, at step 100, can merge parameters from the parameters saved in the request history with parameters that appear on the form in the current configuration of web page 35. Software program 5 can determine which parameters to include in the replay form parameters by comparing how the form parameters were generated. If the user entered a form parameter, the parameter will be included in the replay form parameters, unless, as described above, the parameter was modified by JavaScript. If the form parameter was modified or generated by JavaScript at web browser 20, the JavaScript-generated parameter would be included in the replay form parameters rather than the user entered parameter. If a form parameter was submitted when the user made the original request, but the parameter was not entered by the user or generated by JavaScript, software program 5 will assume the parameter was included in the form itself. Software program 5 will then replace the form parameter originally saved in the request history with the form parameter provided in the form for the current configuration of the originating web page. As an example, a form in originating 35 may have included a session ID when the path was originally defined. If the replay request includes the form parameter saved in the request history, errors will likely result when the replay request is made. The errors may cause a "session expired" message to be returned to software program 5 and the user's path will not be properly simulated. Therefore, software program 5 will replace the session ID stored in the request history with the session ID contained in the form for the current configuration of web page 35, thereby preventing an expiration error. In this manner, software program 5 can place the appropriate content into updated form fields (such as session IDs, timestamps, etc).

If, at step 80, the software program 5 determines that a saved request is not a form request, software program 5, at step 110, determines which URL link in web page 35 is a best-fit for the URL in the saved request. If the exact URL from the saved request is found in a link on web page 35, this exact URL is used in the next request. If the exact URL can not be found, the present invention determines if a nonmatching URL can be found at the address on web page 35 that corresponds to the address of the URL in the original URL request.

An "address", in this context, refers to the place on web page 30 at which a saved request was originally found. When a user defined a path, software program 5, could assign a web page address to each URL requested. The addresses can be assigned based on the structure of tags and attributes in web page 35. For example, given the following page:

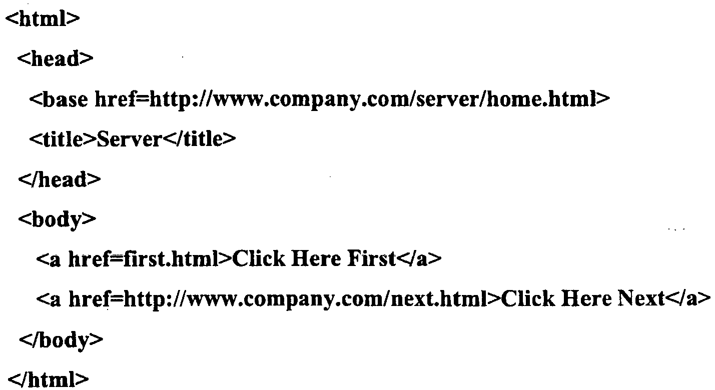

The root of the structured page is an <html> tag. This tag contains two tags a <head> and a <body> tag. The <head> tag contains a <title> tag, and so on. This structure allows an individual attribute value on a HTML page to be assigned an address. For instance, the address of the <a> with the text "Click Here Next" is "html[0].body[0].a[1].hreft 0 ]". This address identifies the exact location of a tag or attribute on web page 35. If the exact URL from the saved request is not found on web page 35, then the URL at the corresponding address will be used. For example, if the user clicked on "Click Here Next" when defining a path web page 35, but the corresponding URL http://www.company.com/next.html could not be found, the replay request would be made to a URL located at the address of "html[0 ].body[0 ].a[1].href[0]" in web page 35. It would be understood that alternative forms of addressing can be used which yield a location within the HTML of web page 35.

Alternatively, if the exact URL in the saved request can not be found in web page 35, software program 5 can match a partial URL. For example, a partial URL match can include matching a somewhat different URL to the URL in a saved request based on the number of characters that match between the URLs.

Software program 5 can also match a URL when web browser 20, through JavaScript, modified a URL originally found in web page 35. For example, if JavaScript appended a string to a URL when the original request was made to the URL, the request with the appended string would be stored in the request history. However, when software program 5 parses the current configuration of web page 35 for the exact URL used in the saved request during replay, the URL will not be found because the string will not be present in web page 35. Software program 5 can append the string saved in the request history to the URL found at the address in web page 35 where the URL of the saved request was originally found.

In summary, at step 110, software program 5 can find a best-fit URL in several ways. Software program 5 can use an exact or partial match to select a best fit URL in the current configuration of web page 35. Software program 5 can also use a system of addresses in order to select a best-fit URL. Software program 5 may also use a combination of partial matching and addresses to select a best-fit URL, particularly when the URL in the saved request is the result of modification by JavaScript.

As shown in Figure 2, after selecting the best-fit URL (step 110) or selecting and populating the best fit form (steps 90 and 100) software program 5, at step 120, can optionally add the appropriate headers to a replay request. Many web pages are browser dependent; that is, they return different data depending on the type of browser used. In order to accurately simulate a user's path, software program 5 sends the headers stored in the request history so that the responding web page will return the same content as if the replay request were made from the user's browser. Furthermore, if target web page 36 requires user authentication, e.g. by returning status code 401, the present invention can return a request with an authentication header. Since the simulation of the user does not involve an actual user, there is no reason to access the authentication window for target web page 36, and this window can be bypassed.

At step 130, software program 5 can determine whether cookies should be returned to target web page 36 based on the creation details of the cookie. Also, software program 5 can modify cookies so that target web page 36 will not return expiration errors. For example, if the user originally visited a web page on March 3, and a cookie was returned that had a one day expiration, the current invention could modify the cookie so that the date returned in the cookie was the current date of the path replay, say October 17, with a one day expiration. The date can be modified because software program 5 stored the creation details of the cookie in database 15 when the path was defined.

Because software program 5 can modify cookies so that target web page 36 will not return errors, a user's path can be replayed through dynamic web pages at subsequent times.

After determining the appropriate target web page 36 and the data to be included, software program 5, at step 140, can make the replay request. The replay request simulates the commands that would be made by a user in order to replay the path previously defined by the user. After making the replay request to target web server 30, software program 5 determines whether or not target web server 30 responded to the replay request. If target web server 30 responded, the current configuration of target web page 36 that was returned will be used as originating page 35 for the subsequent request in the request history. Target web server 30 could, alternatively, not respond or return an error. Software program 5 may receive a "time out error" or a "page not found" error indicating that either the appropriate target web server 30 or target web page 36 was not found. If an error of this nature is received by software program 5, software program 5, at step 160, can notify the user of the error via e-mail, or other means, and terminate the playback process. If target web server 30 responds with target web page 36, software program 5, at step 170, can repeat steps 60-160 of the present invention for each saved request in the request history, thereby replaying the path originally defined by the user.

The present invention provides a system and method for replaying a predefined path that allows a path through both static and dynamic web pages to be simulated. This allows the present invention to be applied to a much greater number of web pages than previously developed methods for replaying paths through a web page.

The present invention has been described in detail, it should be understood that various changes, substitutions and alterations can be made hereto without departing from the invention.

## Claims

1. An iterative process for replaying a predefined path from an intermediate server (10) through a set of web pages in the order the requests to the requests web pages were originally made, wherein requests for the web pages have been saved in a request history built by the intermediate server (10) prior to the replay process, during the process beginning from a starting URL of an originating web page (35) repeating the following steps until the path has been fully replayed or an error has occurred:
- selecting a saved request for a target web page (36) from the request history;
- if the selected request is a form request, selecting (90) a best-fit form to which a replay request for the target web page (36) should be later made from a set of forms in the originating web page (35), in order to avoid errors due to expiration or change in dynamic content when replaying the target web page (36);
- if the selected request is not a form request, selecting (110) a best-fit URL in the originating web page (35) as a target URL to which a subsequent replay request should be made; and
- sending (140) the replay request for the target web page (36) to a target web server (30), the replay request made to the selected best-fit form or to the best-fit URL.

2. The process of Claim 1, wherein the replay request sent to the target web server (30) includes a set of replay form parameters.

3. The process of Claim 2, wherein the set of replay form parameters comprises: a set of saved form parameters; and a set of merged form parameters, wherein the set of merged form parameters includes form parameters from the current configuration of the originating web page (35).

4. The process of Claim 3, further comprising determining whether the selected request is a POST or a GET.

5. The process of Claim 4, wherein selecting (90) a best-fit form comprises: rejecting a potential form from a set of potential forms on originating web page (35) if a URL of the potential form does not begin with the URL for which the selected request is made; if the form request is a POST, rejecting a remaining form from a set of remaining forms, comprising the set of potential forms on originating web page (35) less the already rejected forms, if the remaining form does not require each parameter that would be included in the replay form parameters if the replay request was made for the remaining form; if the set of remaining forms still contains more than one remaining form, rejecting all remaining forms from the set of remaining forms which do not require all hidden form parameters in a set of form parameters saved in the request history; and if there is still more than one remaining form in the set of remaining forms, selecting a best-fit form from the set of remaining forms in a predetermined manner, otherwise selecting the one remaining form in the set of remaining forms as the best-fit form.

6. The process of Claim 4, wherein selecting (90) the best-fit form further comprises: rejecting a potential form from a set of potential forms on originating web page (35) if the URL of the potential form does not begin with the URL for which the selected request is made; if the form request is a GET, rejecting a remaining form from a set of remaining forms, comprising the set of potential forms on originating web page (35) less the already rejected forms, if the remaining form does not require all hidden form parameters included in the saved form parameters; if the set of remaining forms still contains more than one remaining form, rejecting a second remaining form from the set of remaining forms that does not require all the form parameters that would be included in the replay form parameters if a replay request was made to the second remaining form; and if there is still more than one remaining form in the set of remaining forms, selecting a best-fit form from the set of remaining forms in a predetermined manner, otherwise selecting the one remaining form in the set of remaining forms as the best-fit form.

7. The process of Claim 1, selecting (110) the best-fit URL further comprises: if the URL of a link on originating web page (35) exactly matches the URL to which the selected request is directed, selecting the link as the best-fit URL; if the URL of the link on originating web page (35) does not exactly match the URL for which the selected request is made, selecting a non-matching URL located at an address associated with the selected request as the best-fit URL.

8. The process of Claim 7, further comprising, if the non-matching URL partially matches the URL for which the selected request is made, selecting the non-matching URL as the best-fit URL.

9. The process of Claim 8, further comprising appending a string contained in the selected request to the non-matching URL to form the URL for the replay request.

10. The process of Claim 1, wherein the replay request includes a set of headers so that a target web page (36) returns the same contents as if the replay request were made from a particular type of browser (20).

11. The process of Claim 1, wherein the replay request includes a set of cookies, and the set of cookies contains a modified cookie corresponding to a cookie saved in the replay history and corresponding to the selected request, wherein the modified cookie has been modified such that a target web page (36) returns content as if the replay request were made by a new user.

12. The process of one of Claims 1 to 11, comprising a path defining process executed prior to the replay process, the path defining process adapted for creating a path through the set of web pages and comprising the step of receiving a user request for an originating web page (35) and executing the following steps until the user stops the path defining process:
- saving the user request in the request history at the intermediate server (10);
- forwarding the user request to the target web server (30) ;
- receiving the content of the originating web page (35) from the target web server (30);
- mediating the content of the originating web page (35) to refer to the intermediate server (10);
- forwarding the content of the originating web page (35) to the user;
- receiving an additional user request for a target web page (36), wherein the additional user request is based on the mediated content of the originating web page (35);
- making the additional request for the target web page (36) the request for the originating web page (35).

13. A system for replaying a predefined path through a set of web pages from an intermediate server (10) in the order the requests to the web pages were originally made, wherein requests for the web pages have been saved in a request history built by the intermediate server (10) prior to replaying the path, the system comprising: a computer readable medium; and a set of software instructions stored on the computer readable medium operable to cause a computer to beginning from a starting URL of an originating web page (35) repeat the following steps until the path has been fully replayed or an error has occurred:
- select a saved request for a target web page (36) from the request history;
- if the selected request is a form request, select (90) a best-fit form to which a replay request for the target web page (36) should be later made from a set of forms in the originating web page (35), in order to avoid errors due to expiration or change in dynamic content when replaying the target web page (36);
- if the selected request is not a form request, select (110) a best-fit URL in the originating web page (35) as a target URL to which a subsequent replay request should be made; and
- send (140) the replay request for the target web page (36) to a target web server (30), the replay request made to the selected best-fit form or to the best-fit URL.

14. The system of Claim 13, wherein the replay request sent to the target web server (30) includes a set of replay form parameters.

15. The system of Claim 14, wherein the set of replay form parameters includes: a set of saved form parameters; and a set of merged form parameters, wherein the set of merged form parameters includes form parameters from the current configuration of the originating web (35).

16. The system of Claim 15, wherein the software program is further operable to determine whether the selected request is a POST or a GET.

17. The system of Claim 16, wherein the software instructions are further operable to select (90) a best-fit form by:
rejecting a potential form from a set of potential forms on originating web page (35) if the URL of the potential form does not begin with the URL to which the selected request is made; if the form request is a POST, rejecting a remaining form from a set of remaining forms, comprising the set of potential forms on originating web page (35) less the already rejected forms, if the remaining form does not contain each parameter that would be included in the replay form parameters if the replay request were made for the remaining form; if the set of remaining forms contains more than one remaining form, rejecting all remaining forms from the set of remaining forms which do not require all hidden form parameters in a set of form parameters saved in the request history; and if there is still more than one remaining form in the set of remaining forms, selecting a best-fit form from the set of remaining forms in a predetermined manner, otherwise selecting the one remaining form in the set of remaining forms as the best-fit form.

18. The system of Claim 16, wherein the software instructions are further operable to select (90) a best-fit form by:
rejecting a potential form from a set of potential forms on originating web page (35) if the URL of the potential form does not begin with the URL for which the selected request is made; if the form request is a GET, rejecting a remaining form from a set of remaining forms,
comprising the set of potential forms on originating web page (35) less the already rejected forms, if the remaining form does not require all hidden form parameters included in the saved form parameters; if the set of remaining forms still contains more than one remaining form, rejecting a second remaining form from the set of remaining forms that does not require all the form parameters that would be included in the replay form parameters if a replay request were made for the second remaining form; and if there is still more than one remaining form in the set of remaining forms, selecting a best-fit form from the set of remaining forms in a predetermined manner, otherwise selecting the one remaining form in the set of remaining forms as the best-fit form.

19. The system of Claim 13, wherein the software instructions are further operable to select (110) the best-fit URL by:
if the URL of a link on originating web page (35) exactly matches the URL to which the selected request is directed, selecting the link as the best-fit URL; if the URL of the link on originating web page (35) does not exactly match the URL for which the selected request is made, selecting a non-matching URL located at an address associated with the selected request as the best-fit URL.

20. The system of Claim 19, wherein the software instructions are further operable to select (110) a best-fit URL by:
selecting the non-matching URL as the best-fit URL if the non-matching URL partially matches the URL for which the selected request is made.

21. The system of Claim 20, wherein the software instructions are further operable to cause a computer to append a string contained in the selected URL request to the non-matching URL in order to form the URL in the replay request.

22. The system of Claim 13, wherein the replay request includes a set of headers so that a target web page (36) returns the same contents as if the replay request were made from a particular type of browser (20).

23. The system of Claim 13, wherein the replay request includes a set of cookies, and the set of cookies contains a modified cookie corresponding to a cookie saved in the replay history and corresponding to the selected request, wherein the modified cookie has been modified such that a target web page (36) returns content as if the replay request were made by a new user.

## Patentansprüche

1. Iterativer Prozess zum Wiedergeben eines vordefinierten Pfades von einem Zwischenserver (10) durch eine Gruppe von Webseiten in der Reihenfolge, in welcher die Anfragen für die Webseiten ursprünglich erfolgten, wobei Anfragen für die Webseiten in einer Anfragehistorie gespeichert wurden, die von dem Zwischenserver (10) vor dem Wiedergabeprozess aufgebaut wurde, wobei während des Prozesses, beginnend mit einer Ausgangs-URL einer Ursprungswebseite (35) die folgenden Schritte wiederholt werden, bis der Pfad vollständig wiedergegeben wurde oder ein Fehler aufgetreten ist:
- Auswählen eine gespeicherten Anfrage für eine Zielwebseite (36) aus der Anfragehistorie;
- wenn die ausgewählte Anfrage eine Formularanfrage ist, Auswählen (90) eines am besten passenden Formulars, an welches eine Wiedergabeanfrage für die Zielwebseite (36) später erfolgen soll, aus einer Gruppe von Formularen in der Ursprungswebseite (35), um Fehler aufgrund des Ablaufs oder der Veränderung des dynamischen Inhalts zu vermeiden, wenn die Zielwebseite (36) wiedergegeben wird;
- wenn die ausgewählte Anfrage keine Formularanfrage ist, Auswählen (110) einer am besten passenden URL in der Ursprungswebseite (35) als eine Ziel-URL, an welche eine nachfolgende Wiedergabeanfrage gestellt werden soll; und
- Senden (140) der Wiedergabeanfrage für die Zielwebseite (36) an einen Zielwebserver (30), wobei die Wiedergabeanfrage an das ausgewählte am besten passende Formular oder an die ausgewählte am besten passende URL erfolgt.

2. Prozess nach Anspruch 1, wobei die an den Zielwebserver (30) gesendete Wiedergabeanfrage eine Gruppe von Wiedergabeformularparametern enthält.

3. Prozess nach Anspruch 2, wobei die Gruppe der Wiedergabeformularparameter enthält: eine Gruppe von gespeicherten Formularparametern; und eine Gruppe von vereinten Formularparametern, wobei die Gruppe von vereinten Formularparametern Formularparameter aus der gegenwärtigen Konfiguration der Ursprungswebseite (35) enthält.

4. Prozess nach Anspruch 3, ferner enthaltend das Feststellen, ob die ausgewählte Anfrage ein POST oder ein GET ist.

5. Prozess nach Anspruch 4, wobei das Auswählen (90) eines am besten passenden Formulars enthält: Zurückweisen eines potentiellen Formulars aus einer Gruppe von potentiellen Formularen auf einer Ursprungswebseite (35), wenn eine URL des potentiellen Formulars nicht mit der URL beginnt, für die welche die ausgewählte Anfrage erfolgt; wenn die Formularanfrage ein POST ist, Zurückweisen eines verbleibenden Formulars aus einer Gruppe von verbleibenden Formularen, welche die Gruppe der potentiellen Formulare auf der Ursprungswebseite (35) abzüglich der bereits zurückgewiesenen Formulare enthält, wenn das verbleibende Formular nicht jeden Parameter erfordert, der in den Wiedergabeformularparametern enthalten wäre, wenn die Wiedergabeanfrage für das verbleibende Formular erfolgte; wenn die Gruppe von verbleibenden Formularen immer noch mehr als ein verbleibendes Formular enthält, Zurückweisen aller verbleibenden Formulare aus der Gruppe von verbleibenden Formularen, welche nicht alle versteckten Formularparameter in einer Gruppe von Formularparametern erfordern, welche in der Anfragehistorie gespeichert ist; und wenn immer noch mehr als ein verbleibendes Formular in der Gruppe von verbleibenden Formularen ist, Auswählen eines am besten passenden Formulars aus der Gruppe der verbleibenden Formulare in einer vorbestimmten Weise, und andernfalls Auswählen des einen verbleibenden Formulars in der Gruppe von verbleibenden Formularen als das am besten passende Formular.

6. Prozess nach Anspruch 4, wobei das Auswählen (90) des am besten passenden Formulars ferner enthält: Zurückweisen eines potentiellen Formulars aus einer Gruppe von potentiellen Formularen auf der Ursprungswebseite (35), wenn die URL des potentiellen Formulars nicht mit der URL beginnt, für welche die ausgewählte Anfrage erfolgt; wenn die Formularanfrage ein GET ist, Zurückweisen eines verbleibenden Formulars aus einer Gruppe von verbleibenden Formularen, welche die Gruppe der potentiellen Formulare auf der Ursprungswebseite (35) abzüglich der bereits zurückgewiesenen Formulare enthält, wenn das verbleibende Formular nicht alle versteckten Formularparameter erfordert, die in den gespeicherten Formularparametern enthalten sind; wenn die Gruppe von verbleibenden Formularen immer noch mehr als ein verbleibendes Formular enthält, Zurückweisen eines zweiten verbleibenden Formulars aus der Gruppe von verbleibenden Formularen, welches nicht alle Formularparameter erfordert, welche in den Wiedergabeformularparametern enthalten wären, wenn eine Wiedergabeanfrage für das zweite verbleibende Formular erfolgte; und wenn immer noch mehr als ein verbleibendes Formular in der Gruppe von verbleibenden Formularen ist, Auswählen eines am besten passenden Formulars aus der Gruppe der verbleibenden Formulare in einer vorbestimmten Weise, und andernfalls Auswählen des einen verbleibenden Formulars in der Gruppe von verbleibenden Formularen als das am besten passende Formular.

7. Prozess nach Anspruch 1, wobei das Auswählen (110) der am besten passenden URL ferner enthält: wenn die URL eines Links auf der Ursprungswebseite (35) exakt mit der URL übereinstimmt, an welche die ausgewählte Anfrage gerichtet ist, Auswählen des Links als die am besten passende URL; wenn die URL des Links auf der Ursprungswebseite (35) nicht exakt mit der URL übereinstimmt, für welche die ausgewählte Anfrage erfolgt, Auswählen einer nicht übereinstimmenden URL, die an einer Adresse angeordnet ist, die mit der ausgewählten Anfrage in Zusammenhang steht, als die am besten passende URL.

8. Prozess nach Anspruch 7, ferner enthaltend, wenn die nicht übereinstimmende URL teilweise mit der URL übereinstimmt, für welche die ausgewählte Anfrage erfolgt, Auswählen der nicht übereinstimmenden URL als die am besten passende URL.

9. Prozess nach Anspruch 8, ferner enthaltend das Anfügen eines in der ausgewählten Anfrage enthaltenen Strings an die nicht übereinstimmende URL, um die URL für die Wiedergabeanfrage zu bilden.

10. Prozess nach Anspruch 1, wobei die Wiedergabeanfrage eine Gruppe von Headern enthält, so dass eine Zielwebseite (36) dieselben Inhalte zurücksendet, als ob die Wiedergabeanfrage von einer bestimmten Art von Browser (20) erfolgte.

11. Prozess nach Anspruch 1, wobei die Wiedergabeanfrage eine Gruppe Cookies enthält und die Gruppe Cookies ein modifiziertes Cookie enthält, welches einem Cookie entspricht, welches in der Wiedergabehistorie gespeichert ist und der ausgewählten Anfrage entspricht, wobei das modifizierte Cookie so modifiziert wurde, dass eine Zielwebseite (36) Inhalte zurücksendet, als ob die Wiedergabeanfrage von einem neuen Benutzer vollzogen worden wäre.

12. Prozess nach einem der Ansprüche 1 bis 11, enthaltend einen Pfaddefinitionsprozess, der vor dem Wiedergabeprozess ausgeführt wird, wobei der Pfaddefinitionsprozess dafür ausgelegt ist, einen Pfad durch die Gruppe von Webseiten zu schaffen und den Schritt des Empfangens einer Benutzeranfrage für eine Ursprungswebseite (35) und des Ausführens der folgenden Schritte, bis der Benutzer den Pfaddefinitionsprozess stoppt, enthält:
- Speichern der Benutzeranfrage in der Anfragehistorie in dem Zwischenserver (10);
- Weiterleiten der Benutzeranfrage zu dem Zielwebserver (30);
- Empfangen des Inhalts der Ursprungswebseite (35) von dem Zielwebserver (30);
- Vermitteln des Inhalts der Ursprungswebseite (35), um auf den Zwischenserver (10) zu verweisen;
- Weiterleiten des Inhalts der Ursprungswebseite (35) an den Benutzer;
- Empfangen einer zusätzlichen Benutzeranfrage für eine Zielwebseite (36), wobei die zusätzliche Benutzeranfrage auf dem vermittelten Inhalt der Ursprungswebseite (35) basiert;
- Machen der zusätzlichen Anfrage für die Zielwebseite (36) zu der Anfrage für die Ursprungswebseite (35).

13. System zum Wiedergeben eines vordefinierten Pfades durch eine Gruppe von Webseiten von einem Zwischenserver (10) in der Reihenfolge, in welcher die Anfragen für die Webseiten ursprünglich erfolgten, wobei Anfragen für die Webseiten in einer Anfragehistorie gespeichert wurden, die von dem Zwischenserver (10) vor der Wiedergabe des Pfades aufgebaut wurde, welches System enthält: ein computerlesbares Medium; und eine Gruppe von Softwarebefehlen, die auf dem computerlesbaren Medium gespeichert sind und so durchführbar sind, dass sie einen Computer veranlassen, beginnend mit einer Ausgangs-URL einer Ursprungswebseite (35) die folgenden Schritte zu wiederholen, bis der Pfad vollständig wiedergegeben wurde oder ein Fehler aufgetreten ist:
- Auswählen eine gespeicherten Anfrage für eine Zielwebseite (36) aus der Anfragehistorie;
- wenn die ausgewählte Anfrage eine Formularanfrage ist, Auswählen (90) eines am besten passenden Formulars, an welches eine Wiedergabeanfrage für die Zielwebseite (36) später erfolgen soll, aus einer Gruppe von Formularen in der Ursprungswebseite (35), um Fehler aufgrund des Ablaufs oder der Veränderung des dynamischen Inhalts zu vermeiden, wenn die Zielwebseite (36) wiedergegeben wird;
- wenn die ausgewählte Anfrage keine Formularanfrage ist, Auswählen (110) einer am besten passenden URL in der Ursprungswebseite (35) als eine Ziel-URL, an welche eine nachfolgende Wiedergabeanfrage gestellt werden sollte; und
- Senden (140) der Wiedergabeanfrage für die Zielwebseite (36) an einen Zielwebserver (30), wobei die Wiedergabeanfrage an das ausgewählte am besten passende Formular oder an die ausgewählte am besten passende URL erfolgt.

14. System nach Anspruch 13, wobei die an den Zielwebserver (30) gesendete Wiedergabeanfrage eine Gruppe von Wiedergabeformularparametern enthält.

15. System nach Anspruch 14, wobei die Gruppe der Wiedergabeformularparameter enthält: eine Gruppe von gespeicherten Formularparametern; und eine Gruppe von vereinten Formularparametern, wobei die Gruppe von vereinten Formularparametern Formularparameter aus der gegenwärtigen Konfiguration der Ursprungswebseite (35) enthält.

16. System nach Anspruch 15, wobei das Softwareprogramm ferner so durchführbar ist, dass es feststellt, ob die ausgewählte Anfrage ein POST oder ein GET ist.

17. System nach Anspruch 16, wobei die Softwarebefehle ferner so durchführbar sind, dass sie ein am besten passendes Formular auswählen (90) durch: Zurückweisen eines potentiellen Formulars aus einer Gruppe von potentiellen Formularen auf einer Ursprungswebseite (35), wenn die URL des potentiellen Formulars nicht mit der URL beginnt, für welche die ausgewählte Anfrage erfolgt; wenn die Formularanfrage ein POST ist, Zurückweisen eines verbleibenden Formulars aus einer Gruppe von verbleibenden Formularen, welche die Gruppe der potentiellen Formulare auf der Ursprungswebseite (35) abzüglich der bereits zurückgewiesenen Formulare enthält, wenn das verbleibende Formular nicht jeden Parameter erfordert, der in den Wiedergabeformularparametern enthalten wäre, wenn die Wiedergabeanfrage für das verbleibende Formular erfolgte; wenn die Gruppe von verbleibenden Formularen mehr als ein verbleibendes Formular enthält, Zurückweisen aller verbleibenden Formulare aus der Gruppe von verbleibenden Formularen, welche nicht alle versteckten Formularparameter in einer Gruppe von Formularparametern erfordern, welche in der Anfragehistorie gespeichert sind; und wenn immer noch mehr als ein verbleibendes Formular in der Gruppe von verbleibenden Formularen ist, Auswählen eines am besten passenden Formulars aus der Gruppe der verbleibenden Formulare in einer vorbestimmten Weise, und andernfalls Auswählen des einen verbleibenden Formulars in der Gruppe von verbleibenden Formularen als das am besten passende Formular.

18. System nach Anspruch 16, wobei die Softwarebefehle ferner so durchführbar sind, dass sie ein am besten passendes Formular auswählen (90) durch: Zurückweisen eines potentiellen Formulars aus einer Gruppe von potentiellen Formularen auf der Ursprungswebseite (35), wenn die URL des potentiellen Formulars nicht mit der URL beginnt, für welche die ausgewählte Anfrage erfolgt; wenn die Formularanfrage ein GET ist, Zurückweisen eines verbleibenden Formulars aus einer Gruppe von verbleibenden Formularen, welche die Gruppe der potentiellen Formulare auf der Ursprungswebseite (35) abzüglich der bereits zurückgewiesenen Formulare enthält, wenn das verbleibende Formular nicht alle versteckten Formularparameter erfordert, die in den gespeicherten Formularparametern enthalten sind; wenn die Gruppe von verbleibenden Formularen immer noch mehr als ein verbleibendes Formular enthält, Zurückweisen eines zweiten verbleibenden Formulars aus der Gruppe von verbleibenden Formularen, welches nicht alle Formularparameter erfordert, welche in den Wiedergabeformularparametern enthalten wären, wenn eine Wiedergabeanfrage für das zweite verbleibende Formular erfolgte; und wenn immer noch mehr als ein verbleibendes Formular in der Gruppe von verbleibenden Formularen ist, Auswählen eines am besten passenden Formulars aus der Gruppe der verbleibenden Formulare in einer vorbestimmten Weise, und andernfalls Auswählen des einen verbleibenden Formulars in der Gruppe von verbleibenden Formularen als das am besten passende Formular.

19. System nach Anspruch 13, wobei die Softwarebefehle ferner so durchführbar sind, dass sie die am besten passende URL auswählen (110) durch: wenn die URL eines Links auf der Ursprungswebseite (35) exakt mit der URL übereinstimmt, an welche die ausgewählte Anfrage gerichtet ist, Auswählen des Links als die am besten passende URL; wenn die URL des Links auf der Ursprungswebseite (35) nicht exakt mit der URL übereinstimmt, für welche die ausgewählte Anfrage erfolgt, Auswählen einer nicht übereinstimmenden URL, die an einer Adresse angeordnet ist, die mit der ausgewählten Anfrage in Zusammenhang steht, als die am besten passende URL.

20. System nach Anspruch 19, wobei die Softwarebefehle ferner so durchführbar sind, dass sie eine am besten passende URL auswählen (110) durch: Auswählen der nicht übereinstimmenden URL als die am besten passende URL, wenn die nicht übereinstimmende URL teilweise mit der URL übereinstimmt, für welche die ausgewählte Anfrage erfolgt.

21. System nach Anspruch 20, wobei die Softwarebefehle ferner so durchführbar sind, dass sie einen Computer veranlassen, einen in der ausgewählten Anfrage enthaltenen String an die nicht übereinstimmende URL anzufügen, um die URL für die Wiedergabeanfrage zu bilden.

22. System nach Anspruch 13, wobei die Wiedergabeanfrage eine Gruppe von Headern enthält, so dass eine Zielwebseite (36) dieselben Inhalte zurücksendet, als ob die Wiedergabeanfrage von einer bestimmten Art von Browser (20) erfolgte.

23. System nach Anspruch 13, wobei die Wiedergabeanfrage eine Gruppe Cookies enthält und die Gruppe Cookies ein modifiziertes Cookie enthält, welches einem Cookie entspricht, welches in der Wiedergabehistorie gespeichert ist und der ausgewählten Anfrage entspricht, wobei das modifizierte Cookie so modifiziert wurde, dass eine Zielwebseite (36) Inhalte zurücksendet, als ob die Wiedergabeanfrage von einem neuen Benutzer vollzogen wurde.

## Revendications

1. Procédé interactif pour permettre de répéter un trajet prédéfini à partir d'un serveur intermédiaire (10) au travers d'un ensemble de pages web dans l'ordre dans lequel les demandes de pages web ont été initialement effectuées, selon lequel les demandes des pages web ont été sauvegardées dans un historique de demandes construit par le serveur intermédiaire (10) avant le procédé de répétition, au cours du procédé commençant à partir d'un URL de départ d'une page web initiale (35), les étapes suivantes étant répétées jusqu'à ce que le trajet ait été totalement répété ou qu'une erreur se soit produite:
- sélectionner une demande sauvegardée pour une page web cible (36) dans l'historique de demandes;
- si la demande sélectionnée est une demande de formulaire, sélectionner (90) le formulaire le mieux adapté auquel une demande de répétition pour la page web cible (36) devra être ultérieurement effectuée dans un ensemble de formulaires dans la,page web initiale (35), pour éviter des erreurs dues à l'expiration ou à la modification du contenu dynamique lors de la répétition de la page web cible (36);
- si la demande sélectionnée n'est pas une demande de formulaire, sélectionner (110) l'URL le mieux adapté dans la page web initiale (35) en tant qu'URL cible pour lequel une demande de répétition ultérieure devra être faite; et
- transmettre (140) la demande de répétition pour la page web cible (36) à un serveur web cible (30), la demande de répétition étant effectuée pour le formulaire le mieux adapté sélectionné ou l'URL le mieux adapté.

2. Procédé conforme à la revendication 1, selon lequel la demande de répétition transmise au serveur web cible (30) comporte un ensemble de paramètres de formulaires de répétition.

3. Procédé conforme à la revendication 2, selon lequel l'ensemble de paramètres de formulaires de répétition comprend: un ensemble de paramètres de formulaires sauvegardés et un ensemble de paramètres de formulaires fusionnés l'ensemble de paramètres de formulaires fusionnés comportant des paramètres de formulaires provenant de la configuration courante de la page web initiale (35).

4. Procédé conforme à la revendication 3, comprenant en outre une étape consistant à déterminer si la demande sélectionnée est une demande POST ou GET.

5. Procédé conforme à la revendication 4, selon lequel la sélection (90) du formulaire le mieux adapté comprend les étapes consistant à: rejeter un formulaire potentiel d'un ensemble de formulaires potentiels sur la page web initiale (35) si l'URL du formulaire potentiel ne commence pas avec l'URL pour lequel la demande sélectionnée est effectuée; si la demande de formulaire est une demande POST, rejeter un formulaire restant parmi un ensemble de formulaires restants, comprenant l'ensemble de formulaires potentiels sur la page web initiale (35), moins les formulaires déjà rejetés, si le formulaire restant ne contient pas chaque paramètres qui serait inclus dans les paramètres de formulaires répétés si la demande de répétition était effectuée pour le formulaire restant; si l'ensemble de formulaires restants contient encore plus d'un formulaire restant, rejeter tous les formulaires restants de l'ensemble de formulaires restants qui ne demandent pas tous les paramètres de formulaires cachés dans un ensemble de paramètres de formulaires sauvegardés dans l'historique de demandes, et, s'il y a encore plus d'un formulaire restant dans l'ensemble de formulaires restants sélectionner le formulaire la mieux adaptée dans l'ensemble de formulaires restants d'une manière prédéfinie, sinon sélectionner le formulaire restant dans l'ensemble de formulaires restants en tant que formulaire le mieux adapté.

6. Procédé conforme à la revendication 4, selon lequel l'étape consistant à sélectionner (90) le formulaire le mieux adapté comprend en outre les étapes consistant à:
rejeter un formulaire potentiel parmi un ensemble de formulaires potentiels sur la page web initiale (35) si l'URL du formulaire potentiel ne commence pas par l'URL pour lequel la demande sélectionnée est effectuée; si la demande de formulaire est une demande GET, rejeter un formulaire restant parmi un ensemble de formulaires restants, comprenant l'ensemble de formulaires potentiels sur la page web initiale (35) moins les formulaires déjà rejetés, si le formulaire restant ne demande pas tous les paramètres de formulaires cachés inclus dans les paramètres de formulaires sauvegardés; si l'ensemble de formulaires restants renferme encore plus d'un formulaire restant, rejeter un second formulaire restant dans l'ensemble de formulaires restants qui ne demande pas tous les paramètres de formulaires qui seraient inclus dans les paramètres de formulaires de répétition si une demande de répétition était effectuée pour le second formulaire restant; et s'il y a encore plus d'un formulaire restant dans l'ensemble de formulaires restants sélectionner un formulaire le mieux adapté parmi l'ensemble de formulaires restants d'une manière prédéfinie, sinon sélectionner le formulaire restant dans l'ensemble de formulaires restants en tant que formulaire le mieux adapté.

7. Procédé conforme à la revendication 1, selon lequel l'étape consistant à sélectionner (110) l'URL le mieux adapté comporte en outre les étapes suivantes: si l'URL d'un lien sur la page web d'origine (35) correspond exactement à l'URL pour lequel la demande sélectionnée est dirigée, sélectionner le lien comme l'URL le mieux adapté, si l'URL du lien de la page web initiale (35) ne correspond pas exactement à l'URL pour lequel la demande sélectionnée est effectuée, sélectionner un URL non correspondant situé à une adresse associée à la demande sélectionnée en tant qu'URL le mieux adapté.

8. Procédé conforme à la revendication 7, comprenant en outre l'étape suivante: si l'URL non correspondant correspond partiellement à l'URL pour lequel la demande sélectionnée est effectuée, sélectionner l'URL non correspondant en tant qu'URL le mieux adapté.

9. Procédé conforme à la revendication 8, comprenant en outre une étape consistant à annexer une séquence contenue dans la demande sélectionnée à l'URL non correspondant pour former l'URL pour la demande de répétition.

10. Procédé conforme à la revendication 1, selon lequel la demande de répétition comporte un ensemble d'entêtes de sorte qu'une page web cible (36) renvoie les mêmes contenus que si la demande de répétition était effectuée à partir d'un type particulier de navigateur (20).

11. Procédé conforme à la revendication 1, selon lequel la demande de répétition comprend un ensemble de cookies et l'ensemble de cookies comprend un cookie modifié correspondant à un cookie sauvegardé dans l'historique de répétition et correspondant à la demande sélectionnée, le cookie modifié ayant été modifié de sorte qu'une page web cible (36) renvoie son contenu comme si la demande de répétition était effectuée par un nouvel utilisateur.

12. Procédé conforme à l'une des revendications 1 à 11, comprenant un procédé de définition d'un trajet exécuté antérieurement au procédé de répétition, ce procédé de définition d'un trajet étant susceptible de créer un trajet au travers de l'ensemble de pages web et comprenant la réception d'une demande d'utilisateur pour une page web initiale (35) et l'exécution des étapes suivantes jusqu'à ce que l'utilisateur arrête le procédé de définition d'un trajet:
- sauvegarder la demande d'utilisateur dans l'historique de demandes sur le serveur intermédiaire (10);
- envoyer la requête d'utilisateur au serveur web cible (30) ;
- recevoir le contenu de la page web initiale (35) du serveur web cible (30);
- modérer le contenu de la page web initiale (35) pour le renvoyer au serveur intermédiaire (10);
- transmettre le contenu de la page web initiale (35) à l'utilisateur;
- recevoir une demande d'utilisateur supplémentaire pour une page web cible (36), cette demande d'utilisateur supplémentaire étant basée sur le contenu modéré de la page web initiale (35);
- faire de la demande supplémentaire pour la page web cible (36) la demande pour la page web initiale (35).

13. Système permettant de répéter un trajet prédéfini au travers d'un ensemble de pages web à partir d'un serveur intermédiaire (10) dans l'ordre dans lequel les demandes de pages web ont été initialement effectuées, selon lequel les demandes de pages web ont été sauvegardées dans un historique de demandes construit par le serveur intermédiaire (10) avant la répétition du trajet, ce système comprenant: un support lisible par un ordinateur et un jeu d'instructions de logiciel enregistrées sur le support lisible par un ordinateur de sorte qu'un ordinateur en commençant par un URL de départ d'une page web initiale (35), répète les étapes suivantes jusqu'à ce que le trajet ait été totalement répété ou qu'une erreur se soit produite:
- sélectionner une demande sauvegardée pour une page web cible (36) dans l'historique de demandes;
- si la demande sélectionnée est une demande de formulaire, sélectionner (90) le formulaire le mieux adapté auquel une demande de répétition pour la page web cible (36) sera ultérieurement effectuée dans un ensemble de formulaires dans la page web initiale (35) pour éviter des erreurs dues à l'expiration ou à la modification du contenu dynamique lors de la répétition de la page web cible (36);
- si la demande sélectionnée n'est pas une demande de formulaire, sélectionner (110) l'URL le mieux adapté dans la page web initiale (35) en tant qu'URL cible pour lequel une demande de répétition ultérieure devra être effectuée; et
- transmettre (140) la demande de répétition pour la page web cible (36) à un serveur web cible (30), la demande de répétition étant effectuée pour le formulaire le mieux adapté sélectionné ou à l'URL le mieux adapté.

14. Système conforme à la revendication 13, selon lequel la demande de répétition transmise au serveur web cible (30) comprend un ensemble de paramètres de formulaires de répétition.

15. Système conforme à la revendication 14, selon lequel l'ensemble de paramètres de formulaires de répétition comprend: un ensemble de paramètres de formulaires sauvegardés et un ensemble de paramètres de formulaires fusionnés, l'ensemble de paramètres de formulaires fusionnés comprenant des paramètres de formulaires provenant de la configuration courante de la page web initiale (35).

16. Système conforme à la revendication 15, selon lequel le programme de logiciel est en outre susceptible de déterminer si la demande sélectionnée est une demande POST ou GET.

17. Système conforme à la revendication 16, selon lequel les instructions de logiciel sont en outre susceptibles de sélectionner (90) un formulaire le mieux adapté par la mise en oeuvre des étapes consistant à:
rejeter un formulaire potentiel parmi un ensemble de formulaires potentiels sur la page web initiale (35) si l'URL du formulaire potentiel ne commence pas par l'URL pour lequel la demande sélectionnée est effectuée, si la demande de formulaire est une demande POST, rejeter un formulaire restant parmi un ensemble de formulaires restants, comprenant l'ensemble de formulaires potentiels sur la page web initiale (35) moins les formulaires déjà rejetés, si le formulaire restant ne contient pas chaque paramètre qui serait renfermés dans les paramètres de formulaires répétés si la demande de répétition était effectuée pour le formulaire restant ; si l'ensemble de formulaires restants contient encore plus d'un formulaire restant, rejeter tous les formulaires restants de l'ensemble de formulaires restants qui ne demandent pas tous les paramètres de formulaires cachés dans un ensemble de paramètres de formulaires sauvegardés dans l'historique de demandes, et s'il y a encore plus d'un formulaire restant dans l'ensemble de formulaires restants sélectionner le formulaire le mieux adapté dans l'ensemble de formulaires restants d'une manière prédéfinie, sinon sélectionner le formulaire restant dans l'ensemble de formulaires restants en tant que formulaire le mieux adapté.

18. Système conforme à la revendication 16, selon lequel les instructions de logiciel sont en outre susceptibles de sélectionner (90) un formulaire le mieux adapté par la mise en oeuvre des étapes consistant à:
rejeter un formulaire potentiel parmi un ensemble de formulaires potentiels sur la page web initiale (35) si l'URL du formulaire potentiel ne commence pas par l'URL pour lequel la demande sélectionnée est effectuée, si la demande de formulaire est une demande GET, rejeter un formulaire restant parmi un ensemble de formulaires restants comprenant l'ensemble de formulaires potentiels sur la page web initiale (35) moins les formulaires déjà rejetés si le formulaire restant ne demande pas tous les paramètres de formulaires cachés compris dans les paramètres de formulaires sauvegardés; si l'ensemble de formulaires restant comprend encore plus d'un formulaire restant, rejeter un second formulaire restant dans l'ensemble de formulaires restant qui ne demande pas tous les paramètres de formulaires qui seraient renfermés dans les paramètres de formulaires de répétition si une demande de répétition était effectuée pour le second formulaire restant, et s'il y a encore plus d'un formulaire restant dans l'ensemble de formulaires restants sélectionner un formulaire le mieux adapté parmi l'ensemble de formulaires restants d'une manière prédéfinie, sinon sélectionner le formulaire restant dans l'ensemble de formulaires restants en tant que formulaire le mieux adapté.

19. Système conforme à la revendication 13, selon lequel les instructions de logiciel sont en outre susceptibles de sélectionner (110) l'URL le mieux adapté par la mise en oeuvre des étapes consistant à:
si l'URL d'un lien sur la page web initiale (35) correspond exactement à l'URL pour lequel la demande sélectionnée est dirigée, sélectionner le lien comme l'URL le mieux adapté, si l'URL du lien de la page web initiale (35) ne correspond pas exactement à l'URL pour lequel la demande sélectionnée est effectuée,
sélectionner un URL non correspondant situé à une adresse associée à la demande sélectionnée en tant qu'URL le mieux adapté.

20. Système conforme à la revendication 19, selon lequel les instructions de logiciel sont en outre susceptibles de sélectionner (110) l'URL le mieux adapté en:
sélectionnant l'URL non correspondant en tant qu'URL le mieux adapté si l'URL non correspondant correspond partiellement à l'URL pour lequel la demande sélectionnée est effectuée.

21. Système conforme à la revendication 20, selon lequel les instructions de logiciel sont en outre susceptibles de faire en sorte qu'un computer annexe une séquence contenue dans la demande d'URL sélectionnée à l'URL non correspondant pour former l'URL pour la demande de répétition.

22. Système conforme à la revendication 13, selon lequel la demande de répétition comprend un ensemble d'entêtes de sorte qu'une page web cible (36) renvoie les mêmes contenus que si la demande de répétition était effectuée à partir d'un type particulier de navigateur (20).

23. Système conforme à la revendication 13, selon lequel la demande de répétition comprend un ensemble de cookies et l'ensemble de cookies comprend un cookie modifié correspondant à un cookie sauvegardé dans l'historique de répétition et correspondant à la demande sélectionnée, le cookie modifié ayant été modifié de sorte qu'une page web cible (36) renvoie son contenu comme si la requête de répétition était effectuée par un nouvel utilisateur.
